(19) Europäisches Patentamt
European Patent Office
Office européen des brevets

(11)  **EP 2 608 870 B1**

(12)  # EUROPEAN PATENT SPECIFICATION

(45) Date of publication and mention
of the grant of the patent:
**31.12.2014 Bulletin 2015/01**

(51) Int Cl.:
**B01D 53/86** *(2006.01)*    **B01J 29/072** *(2006.01)*
**B01J 29/24** *(2006.01)*    **B01J 29/46** *(2006.01)*
**B01J 29/76** *(2006.01)*

(21) Application number: **11746588.0**

(22) Date of filing: **26.08.2011**

(86) International application number:
**PCT/EP2011/064731**

(87) International publication number:
**WO 2012/025617 (01.03.2012 Gazette 2012/09)**

(54) **MORDENITE-TYPE ZEOLITE SCR CATALYSTS WITH COPPER**

MORDENIT-ZEOLITH-SCR-KATALYSATOREN MIT KUPFER

CATALYSEURS DE RCS ZÉOLITIQUES DE TYPE MORDÉNITE RENFERMANT DU CUIVRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2010 US 377672 P
27.08.2010 EP 10174381**

(43) Date of publication of application:
**03.07.2013 Bulletin 2013/27**

(73) Proprietor: **Technical University of Denmark
2800 Kgs. Lyngby (DK)**

(72) Inventors:
• **SANKAR REDDY, Putluru Siva
DK-2800 Kgs. Lyngby (DK)**

• **RIISAGER, Anders
DK-2630 Taastrup (DK)**
• **FEHRMANN, Rasmus
DK-2100 København Ø (DK)**

(74) Representative: **Zacco Denmark A/S
Arne Jacobsens Allé 15
2300 Copenhagen S (DK)**

(56) References cited:
**EP-A1- 1 923 135    WO-A2-2004/108264
DE-A1- 3 722 081    DE-A1- 4 443 301
US-A- 4 961 917    US-A- 5 059 569
US-B2- 7 182 927**

**Description**

**Field of the invention**

The present invention concerns the selective removal of nitrogen oxides (NOx) from gasses. In particular, the invention concerns highly alkali metal resistant copper-zeolite catalysts and the use of said catalysts for removal of NOx from exhaust or flue gases, said gases comprising alkali or earth alkali metals. Such gases comprise for example flue gases arising from the burning of biomass, combined biomass and fossil fuel, and from waste incineration units. The process comprises the selective catalytic reduction (SCR) of NOx, such as nitrogen dioxide ($NO_2$) and nitrogen oxide (NO) with ammonia ($NH_3$) or a nitrogen containing compound selected from ammonium salts, urea or a urea derivative as reductant.

**Background of the invention**

The selective catalytic reduction (SCR) of nitrogen oxides (collectively denoted $NO_x$) with ammonia as the reducing agent is an important process in the avoidance of harmful emissions from combustion and high temperature processes (H. Bosch et al., Catal. Today, 1988, 2, 369; G. Busca et al., Appl. Catal. B, 1998, 18, 1; P. Forzatti et al., Heterog. Chem. Rev., 1996, 3, 33; S. Brandenberger et al., Catal. Rev., 2008, 50, 492).
The process is currently being used extensively to reduce the $NO_x$ from stationary sources (especially power plants) and SCR technology is also increasingly being employed in the reduction of $NO_x$ from automotive vehicles. The current industrial catalyst of choice for the SCR reaction is vanadia supported on anatase phase titania - often promoted with $WO_3$ or $MoO_3$. The $V_2O_5/WO_3(MoO_3)$-$TiO_2$ catalyst does however have some limitations in the form of toxicity and in the form of a limited stability and selectivity at higher temperatures (S. Brandenberger *supra*). Conventional vanadia based catalysts have a weakness in the form of a susceptibility to poisoning by alkali metals (J.P. Chen et al., J. Catal., 1990, 125, 411; J. Due-Hansen et al., J. Catal., 2007, 251, 459; Y. Zheng et al., Ind. Eng. Chem. Res., 2004, 43, 941). This is a significant drawback in the combustion of alkali rich fuels like straw, and this problem of alkali poisoning has spread the search for alternative SCR catalysts with a greater alkali tolerance. As of now there is no such commercial catalyst for the biomass fired flue gas $NO_x$ treatment.
Because of the severe environments in which the SCR reaction is conducted, long-term deactivation has been an important practical problem. Although the causes for deactivation are many and complex, chemical deactivation is a major cause and it is directly related to the mechanism of the SCR reaction. Among chemical deactivation alkali poisoning is very severe when biomass is used as a fuel.
There is consequently still a need for developing SCR catalysts which may function well under the specific and very demanding conditions of biomass incineration, and at the same time be sufficiently robust to allow for uninterrupted performance over long time periods. Due to the toxicity issues associated with Vanadium, there is also a need for developing vanadia-free SCR catalysts.
The unique properties of zeolites could convey a good alkali tolerance to the catalyst, so Metal/Zeolite systems may have an application in $NO_x$ removal from stationary emitters. In the present work, we report two efficient and promising alkali resistant, vanadia-free catalysts for biomass fired SCR application: a Cu-zeolite and a Fe-zeolite catalyst.
US 7,264,785 mentions a catalyst system for Internal Combustion Engines (i.e. non-stationary) comprising different metals supported on a zeolite for use in Selective Catalytic Reduction (SCR) of NOx by ammonia. The reference also mentions SCR of NOx in exhaust gases by ammonia, but only achieves about 50-65% total conversion of NOx. The role of the zeolite is to absorb humidity and to catalyze the conversion of ammonia precursors such as urea to ammonia. Other references mention zeolitic catalyst systems which are impregnated/ion exchanged with metal/metal ions, eg. US 6,528,031 B1 which only discusses noble metals, US 2008/0127638 A1 which discusses the platinum group metals, US 7,005,116 B2 which only discusses the use of transition metals, MORDENITE is not found to be a suitable zeolite either, US 5,059,569 A1 which discusses Cu, V, W, Fe, Co and Mo on zeolites with a $SiO_2/Al_2O_3$ ratio of 4-6, US 2007/0134146 A1 which is directed to copper-on-$\gamma$-zeolite catalysts with a typical loading of about 5% metal oxide., US 5,260,043 A1 which only discusses Co, Ni, Fe, Cr, Rh, Mn and not Cu. US 2010/0075834 A1 discloses a preparation of metal-doped zeolites by grinding a dry mixture of a zeolite with a compound of a catalytically active metal, followed by heating the mixture in a reactor. The obtained catalyst can be used in SCR deNOx reactions. Cu, Co, Rh, Pd, Ir, Pt, Ru, Fe, Ni, and V are mentioned, only a Fe based catalyst is exemplified and not Cu. Due to the vastly different manufacturing processes, the obtained catalysts are not easily comparable.
None of these references mention Cu or Fe as the preferred catalytic metal, and none mention the selective catalytic reduction of NOx in exhaust or flue gases obtained from burning biomass. Also, no reference discusses the problem of alkali metals being present in exhaust gases released on burning biomass, which will normally lead to fast and irreversible poisoning of standard commercial SCR deNOx catalysts.
DE3722081 discloses a catalyst for removing nitrogen oxides whose activity deterioration due to volatile poisons contained in exhaust gases is prevented, which catalyst comprises a titania having a surface area of 20 m$^2$/g or less and a zeolite having 0.01 to 20% by weight of copper supported thereon. The catalyst has an average pore diameter of 10 A or less and a silica/alumina molar ratio of 10 or more. The process comprises mixing powder of the zeolite with the titania or its precursor, followed by moulding the mixture into a predetermined shape, followed by calcining the resulting material at 800°C.

**Summary of the invention**

Zeolites are hydrated aluminosilicates with open, wide-meshed frameworks composed of $SiO_4$ and $AlO_4$ tetrahedra. Mordenite is a high-silica zeolite in which the Si/Al ratio of the framework is moderately variable. Mordenite-type zeolites with a $SiO_2/Al_2O_3$ ratio of 5-40 have been found to be the optimum choice for alkali resistivity.

**The first aspect** of the invention concerns a method for providing a Cu-zeolite catalyst, comprising the steps of:

a) treating the zeolite support with a solution of a Cu precursor, using the incipient wet impregnation method and a suitable Cu precursor, followed by

b) drying the obtained zeolite pre-catalyst at 120°C for 12 hours followed by calcination at 500 °C for 5 hours, thereby generating the finished catalyst,

wherein said Cu precursor is copper nitrate, the zeolite support is HMORDENITE having a $SiO_2/Al_2O_3$ ratio between 5 and 40, and wherein said catalyst comprises 3-6% w/w Cu.

Another **aspect** of the invention concerns a use according to claim 8.

**Figures**

Fig. 1        Effect of Cu loading on the SCR activity at 400 °C.

Fig. 2        EPR spectra of Cu/zeolite catalysts recorded at room temperature.

Fig. 3        H$_2$-TPR profiles of Cu/zeolite catalysts.

Fig. 4a-c     NH$_3$-TPD profiles of pure zeolite, Cu/zeolite and potassium doped Cu/zeolite catalysts.

Fig. 5        SCR activity of Cu/zeolites at various K/Cu molar ratios.

Fig. 6        Relative activity of Cu/zeolite and VWT catalysts at various potassium concentrations.

Fig. 7        EPR spectra of potassium doped Cu/zeolite catalysts recorded at room temperature.

Fig. 8        H$_2$-TPR profiles of potassium doped Cu/zeolite catalysts.

Fig. 9        X-band EPR spectra of Fe-zeolite catalysts recorded at room temperature.

Fig. 10       Catalytic activity profiles of fresh Fe-zeolite and K-Fe-zeolite catalysts. Reaction conditions: 1000 ppm NO, 1100 ppm NH$_3$, 3.5 % O$_2$, 2.3% H$_2$O, balance N$_2$.

Fig. 11       Relative catalytic activity of Fe-zeolite and VWT catalysts with different potassium concentrations at 400 °C.

Fig. 12       NH$_3$-TPD profiles of zeolites, Fe-zeolites and K-Fe-zeolites.

Fig. 13       H$_2$-TPR profiles of Fe-zeolites and K-Fe-zeolites.

Fig. 14       SCR activity of 3 wt.% Fe-Zeolite catalysts prepared by the incipient wet impregnation method. Reaction conditions: 1000 ppm NO, 1100 ppm NH$_3$, 3.5 % 0$_2$, 2.3% H$_2$O, balance N$_2$.

Fig. 15       SCR activity of Cu-Zeolite catalysts prepared by the ion-exchange method. Reaction conditions: 1000 ppm

NO, 1100 ppm $NH_3$, 3.5 % $O_2$, 2.3% $H_2O$, balance $N_2$.

## Detailed description of the invention

Described herein in an example not forming part of the invention is the use of a zeolite catalyst in the selective removal of nitrogen oxides (SCR) from gases containing a significant amount of alkali metal and/or alkali earth compounds, which catalyst comprises:

a. a zeolite support with a $SiO_2/Al_2O_3$ ratio between 5 and 40

b. 3-6% w/w M, wherein M is a metal selected from Fe or Cu

wherein the zeolite is a mordenite-type zeolite, and which removal takes place in the presence of a nitrogen containing compound selected from ammonia, ammonium salts, urea or a urea derivative.

In an example the metal is copper. In another example the metal is iron. The metal is present as metal oxides in the final catalyst.

In one example the zeolite has a $SiO_2/Al_2O_3$ ratio of 5-40. In another example the zeolite has a $SiO_2/Al_2O_3$ ratio of 5-25. In another example the zeolite has a $SiO_2/Al_2O_3$ ratio between 10 and 25. In another example the zeolite has a $SiO_2/Al_2O_3$ ratio between 5 and 10. In another example the zeolite has a $SiO_2/Al_2O_3$ ratio of 5-15. In another example the zeolite has a $SiO_2/Al_2O_3$ ratio selected from 40, 25,15, 10 or 5.

In one example the catalyst has a M/Al ratio of 1.60 or lower. In another example the catalyst has a M/Al ratio of 1.26 or lower. In another example the catalyst has a M/Al ratio of 0.78 or lower. In another example the catalyst has a M/Al ratio of 0.58 or lower. In another example the catalyst has a M/Al ratio of 0.44 or lower. In another example the catalyst has a M/Al ratio of 0.38.

In a further example the zeolite is selected from mordenite zeolites in protonated form.

In a further example the zeolite is selected from HMORDENITE, and other Mordenite type zeolites. In another example the zeolite is HMORDENITE.

In yet another example the zeolite is selected from commercially available mordenite-type zeolites such as 660HOA; AR 1 (zeolite); CBV-10A; CBV-21A; CP 504-20; CPX 51; HS-690; Hydrogen Mordenite; HSH 620HOA; HSZ 600HOA; HSZ 640HOA; HSZ 640NAD; HSZ 650; HSZ 690; HSZ 690HOA;HSZ 690HOD; Izuka Lite; JRC-Z-M; LZM; LZM 8; M zeolites; MOR zeolites; NC 301; NM100S; PQ 511; SP 30; SP 30 (zeolite); Superzeo; T 81; T 81 (zeolite); TSZ 600;TZM 1013; ZM 510; ZPC 10A; Zeocat FM 8; Zeocat FM 8/25H; Zeocros CF 815A; Zeocros CF 815B; Zeolite AR; Zeolite MOR; Zeolites, MOR-type; Zeolon; Zeolon400; Zeolon 500H; Zeolon 900 and Zeolon 900Na.

The zeolite support is preferably treated with a solution of a suitable Fe- or Cu precursor to achieve a final loading of between 3 and 6% w/w of the relevant metal oxide after calcination.

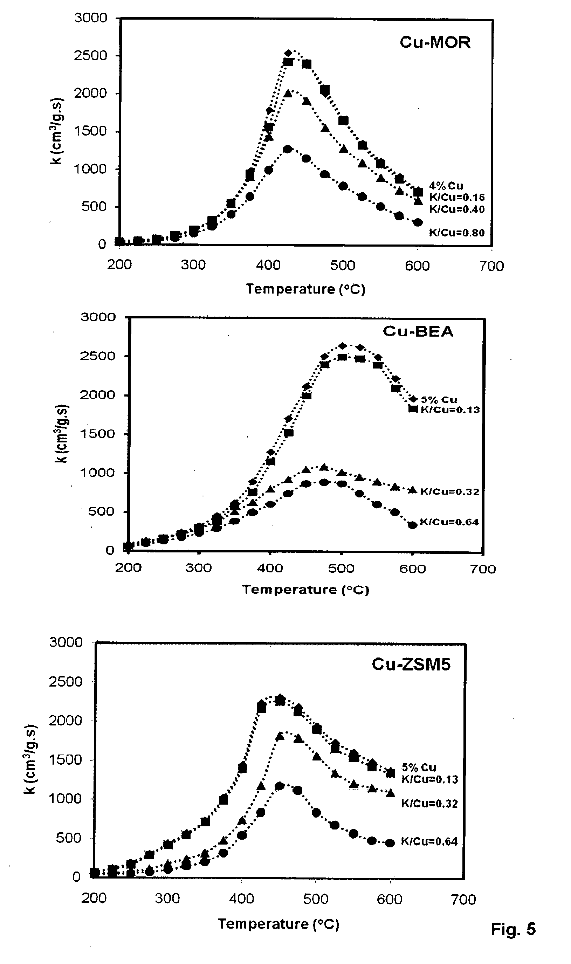

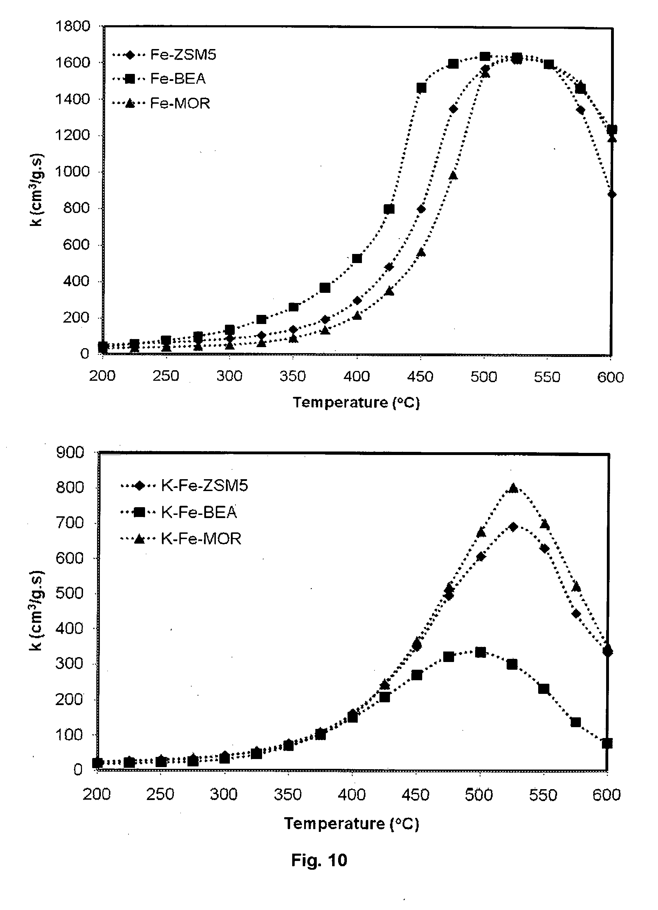

Precipitating iron or copper on zeolites as disclosed in the present application has the technical effect that it allows a high loading of up between 3 and 6% w/w metal (as the corresponding metal oxide in the final catalyst) without exceeding monolayer coverage, in contrast to typical (non-zeolitic) industrial catalysts, which have approximately half the capacity of the zeolitic catalysts of the present invention. The thus obtained catalysts showed remarkable SCR activity (as measured by the rate constant for the SCR process) cf. figure 5 and 10.

In an example the calcined zeolite catalyst contains between 3 and 6% w/w Cu (as copper oxides). In an example the calcined zeolite catalyst contains between 4 and 5% w/w Cu. In an example the calcined zeolite catalyst contains around 4% w/w Cu or around 5% w/w Cu.

In an example the calcined zeolite catalyst contains between 3 and 6% w/w Fe (as iron oxides). In an example the calcined zeolite catalyst contains around 3% w/w Fe or around 5.6% w/w Fe.

In an example the zeolite catalyst comprises 4% w/w Cu (as copper oxides) on the HMORDENITE zeolite support.

In another example the zeolite catalyst comprises 4% w/w Cu (as copper oxides) on a mordenite-type zeolite support having a $SiO_2/Al_2O_3$ ratio of 5-40.

In a further example the zeolite catalyst comprises 3% Fe w/w (as iron oxides) on the HMORDENITE zeolite support.

In another example the zeolite catalyst comprises 3% Fe w/w (as iron oxides) on a mordenite-type zeolite support having a $SiO_2/Al_2O_3$ ratio of 5-40.

Ammonia is commonly used for the reduction of nitrogen oxides to nitrogen and water by the zeolitic catalysts of the invention, but solid "ammonia-like" materials like ammonium salts, urea and urea derivatives which may be converted to ammonia under the reaction conditions for the selective removal of nitrogen oxides from gases, may be economically viable and less hazardous alternatives to ammonia. Thus, in an example, the selective removal of nitrogen oxides takes place in the presence of an ammonium salt. In another example the selective removal of nitrogen oxides takes place in the presence of urea or a urea derivative. In an example the selective removal of nitrogen oxides takes place in the presence of ammonia.

The catalysts of the present invention display a useful activity over a very wide temperature range which can be tuned for individual purposes by choosing the zeolite carrier and the catalytic metal appropriately. Thus, in an example the selective removal of nitrogen oxides takes place between 320 and 450 °C, which is suitable for most traditional stationary incineration plants having been designed for traditional SCR catalysts. In another example the selective removal of nitrogen oxides takes place in equipment suited for higher temperatures between 450 and 550 °C. In general, the Cu-based zeolite catalysts achieve their maximum rate constant values at higher temperatures than the corresponding Fe-based zeolite catalysts. However, as can be seen from figure 5 and 10, very high rate constants were observed already at lower temperatures.

In an example the use of a zeolite catalyst comprising 3-6% w/w Fe or Cu (as iron or copper oxides) is disclosed. In a further example the use of a zeolite catalyst wherein the zeolite has a $SiO_2/Al_2O_3$ ratio of between 5 and 40 is disclosed. In a further example the use of a zeolite catalyst wherein the zeolite has a $SiO_2/Al_2O_3$ ratio of between 10 and 25 is disclosed. In another example the use of a zeolite catalyst wherein the zeolite has a $SiO_2/Al_2O_3$ ratio of between 5 and 10 is disclosed. In another example the use of a zeolite catalyst wherein the zeolite support is selected from HMORDENITE and other mordenite-type zeolites is disclosed. In a different example, the use of a zeolite catalyst for the selective removal of nitrogen oxides taking place in the presence of ammonia or urea; and at a reaction temperature from about 320°C to about 550°C is disclosed.

**The first aspect** of the invention concerns a method for providing a zeolite catalyst, comprising the steps of:

a) treating the zeolite support with a solution of a Cu precursor, using the incipient wet impregnation method and a suitable metal precursor, followed by

b) drying the obtained zeolite pre-catalyst at 120°C for 12 hours followed by calcination at 500 °C for 5 hours, thereby generating the finished catalyst,

wherein said Cu precursor is copper nitrate, the zeolite support is a HMORDENITE having a $SiO_2/Al_2O_3$ ratio between 5 and 40, and wherein said catalyst comprises 3-6% w/w Cu.

In a specific embodiment the invention provides a catalyst which is obtainable by the method of the first aspect of the present invention.

The Cu precursor is copper nitrate.

In a further embodiment the zeolite catalysts obtained by the method of the first aspect have a light-off temperature (i.e. the temperature at which a catalytic converter achieves a 50% conversion rate) of between 425-475 °C. In another embodiment the zeolite catalysts obtained by the method of the first aspect have a light-off temperature around 400 °C. In general, Cu-based zeolite catalysts of the present invention have lower light-off temperatures and higher maximum rate constant values than the Fe-based analogues.

In a preferred embodiment of the invention, the zeolite catalysts obtained by the method of the first aspect of the present invention have a large surface area and a high total acidity.

Another **aspect** of the invention concerns a use according to claim 8.

Among the examined zeolite catalysts described herein 5% Cu on HBEA (Cu-BEA) showed the highest catalytic activity followed by 4% Cu on HMORDENITE (Cu-MOR), and 5% Cu on HZSM5 (Cu-ZSM5). 5% Cu on HBEA (Cu-BEA) catalysts showed a maximum rate constant value of 2646 $cm^3/g\cdot s$, whereas 4% Cu on HMORDENITE (Cu-MOR) and 5% Cu on HZSM5 (Cu-ZSM5) catalysts showed maximum rate constant values of 2542 and 2315 $cm^3/g\cdot s$, respectively. All the examined Fe-zeolite catalysts not forming part of the invention showed maximum rate constant values of around 1600 $cm^3/g\cdot s$.

The 4% Cu on HMORDENITE (Cu-MOR) and 5% Cu on HZSM5 (Cu-ZSM5) catalysts showed maximum catalytic activity at around 430 °C, whereas the 5% Cu on HBEA (Cu-BEA) catalyst showed maximum catalytic activity at around 500 °C.

The 3% Fe on HMORDENITE (Fe-MOR) and 3.2% Fe on HZSM5 (Fe-ZSM5) catalysts showed maximum catalytic activity at around 525 °C, whereas the 5.6% Fe on HBEA (Fe-BEA) catalyst showed maximum catalytic activity at around 500 °C.

It was surprisingly found that the catalytic activity of the Cu zeolite catalysts obtained by the method of the first aspect of the present invention can be maintained even when the catalyst is exposed to moisture.

Thus, in another preferred embodiment the invention concerns a use according to claim 9.

It was furthermore surprisingly found that the Cu zeolite catalysts obtained by the method of the first aspect of the present invention show high poisoning resistivity after doping with potassium oxide (500 μmol/g) and therefore are capable of maintaining a high catalytic activity even when exposed to gases containing significant amounts of alkali metal and/or alkali earth compounds. The poisoning resistance is believed to be due to a unique combination of high surface area, acidity and micropore structure of the zeolite support.

In general, the Fe-based zeolite catalysts described herein but not forming part of the invention were more resistant to potassium poisoning than the corresponding Cu-based zeolite catalysts. Thus the Fe-MOR catalyst retained about 70% of its activity at a loading of 500 $\mu$mol/g potassium, whereas the corresponding Cu-MOR catalyst only retained about 55% of its activity at the same potassium level.

Accordingly, disclosed herein is also a process for the selective removal of nitrogen oxides with ammonia from gases resulting from the burning of biomass, combined biomass-fossil fuel, or emerging from waste incineration units, which gases contain significant amounts of alkali metal and/or alkali earth compounds, such as, for example, up to several hundred mg potassium per $m^3$ gas, which process comprises using a catalyst obtainable by the method of the first aspect of the invention.

In the context of the present invention, the terms "around", "about", or "approximately" are used interchangeably and refer to the claimed value, and may include variations as large as +/-0.1%, +/-1 %, or +/-10%. Especially in the case of $\log_{10}$ intervals, the variations may be larger and include the claimed value +/- 50%, or 100%. The terms "around", "about", or "approximately" may also reflect the degree of uncertainty and/or variation that is common and/or generally accepted in the art.

According to one embodiment of the invention, the catalyst according to the invention is provided in a form that provides minimal resistance to the flue gases, such as minimal pressure loss, while still providing reliable catalytic conversion of NOx to $N_2$. Generally, shapes, dimensions and designs of such a catalyst are known in the art.

The catalyst can for example be shaped as a monolith, extrudate, bead, plate, sheet or fibrous cloth, where the active phases can be introduced to the conformed material either by wash-coating, extrusion or spray painting, methods that are generally well-established in the art.

Commonly, for low temperature applications, such as placement of the catalyst unit in the flue gas duct after dust filtration in waste incineration plants, the temperature of the flue gas is in the range of 150-300°C. In the case of high temperature applications, such as placement of the catalyst unit at high dust positions in the flue gas duct, the temperature of the flue gas is often in the range of 340-420°C. For intermediate temperature applications, the temperature of the flue gas is in the area of about 250-370°C. The catalysts of the present invention can be placed at high dust positions in the flue gas duct due to their superior alkali metal poisoning resistivity, which allows them to catalyze the deNOx reaction with a much higher rate constant than if they were placed after a dust filter where the temperature is lower.

Commonly, one or more heat exchange units are provided in order to utilize the thermal energy of the flue gas. In one example, the SCR process according to the invention takes place before a heat exchange unit. In a further example, the SCR process is conducted after a heat exchange unit. In yet another example, the SCR process takes place in between heat exchange units. In still another example, heat controlling means are provided in order to control the temperature of the flue gas before and/or during the SCR. Thereby the efficiency of the SCR process can be controlled and/or optimized for the respective catalyst according to the invention, and its temperature profile with respect to catalytic activity. Such heat controlling means may comprise means to alter the rate of combustion, means to alter the flow of gas and the like. Generally, such means are well-known in the art.

Very often, fuels containing alkali metals as well as earth alkali will also contain significant amounts of alkali metals as well as earth alkali in the resulting flue gases upon incineration or burning. Fossil fuels, such as oil, natural gas and coal contain lower amounts of alkali metals and earth alkali metals. Waste, such as waste burned in waste incineration plants contains high levels of alkali metals as well as earth alkali metals. Biomass or biomass fuel such as straw, woodchips and wood pellets contain very high levels of alkali metals, especially K, as well as earth alkali metals. In the case of fly ash from burning straw, alkali metals and earth alkali metals can comprise as much as half of the total weight of the fly ash. Flue gases stemming from the incineration of biomass fuel typically contain about 200-1000 mg $KCl/Nm^3$, whereas incineration of coal only leads to ppm levels of KCl.

By the use of a catalyst according to the invention, the lifetime can be increased significantly compared to conventional, non-zeolitic catalysts. In one embodiment of the invention, the life time of the catalyst is increased by a factor of at least 1.5; 1.5-3.0; 3.0-5.0; 5.0-10; or 100, compared to a similar/comparable catalyst without zeolitic support. In a further embodiment of the invention, the lifetime of the catalyst according to the invention is 2-5 times compared to a comparable catalyst without zeolitic support. Apart from economical benefits, this also provides a greater flexibility with respect to exchange and/or cleaning of the catalyst. By a larger window of opportunity for when to close the plant for exchange, cleaning, or reactivation of the catalyst, sensitive time periods may be avoided. For many applications, a shut down during summer is less expensive than during winter.

A catalyst according to the present invention can be treated and handled using conventional methods and techniques in the field. The catalyst can also be cleaned/washed and recycled.

The present invention will be better understood after reading the following non-limiting examples.

**Experimental**

*Cu-zeolite catalyst preparation and characterization*

Cu/zeolite catalysts were prepared by incipient wet impregnation using appropriate amounts of copper nitrate (Aldrich, 99.99%) as a precursor and HMORDENITE (400 $m^2$/g), HZSM5 (500 $m^2$/g) or HBETA (680 $m^2$/g), respectively as supports (HMORDEN ITE was obtained by protonation of the ammonia form CBV21A zeolite support from Zeolyst International by routine methods). Optimum Cu/zeolite catalysts were then poisoned by incipient wet impregnation with 0.05-0.15 M solution of potassium nitrate (Aldrich, 99.99%) to obtain a potassium loading of 100, 250 and 500 $\mu$mol/g. The prepared catalysts were oven dried at 120 °C for 12 h and finally calcined at 500 °C for 5 h before use.

BET surface areas of the samples were determined from nitrogen physisorption measurements on about 100 mg sample at liquid nitrogen temperature with a Micromeritics ASAP 2010 instrument. The samples were heated to 200 °C for 1 h prior to the measurement.

EPR spectra of the catalysts were recorded ex-situ with a Bruker EMX-EPR spectrometer working in the X-band (Bruker ER 041 XGG Microwave Bridge) at microwave frequencies around 9.75 GHz. The measurements were done at room temperature on samples transferred directly after calcination into an excicator. Data treatment was performed with WIN-EPR software provided by Bruker.

$NH_3$-TPD experiments were conducted on a Micromeritics Autochem-II instrument. In a typical TPD experiment, 100 mg of dried sample was placed in a quartz tube and pretreated in flowing He at 500 °Cfor 2h. Then, the temperature was lowered to 100 °C and the sample was treated with anhydrous $NH_3$ gas (Air Liquide, 5% $NH_3$ in He). After $NH_3$ adsorption, the sample was flushed with He (50 ml/min) for 100 min at 100 °C. Finally, the TPD operation was carried out by heating the sample from 100 to 700 °C (10 °C/min) under a flow of He (25 ml/min).

$H_2$-TPR studies were also conducted on a Micromeritics Autochem-II instrument. In a typical experiment, 100 mg of oven-dried sample was placed in one arm of a U-shaped quartz tube on quartz wool. Prior to TPR, the catalyst sample was pretreated by flushing with air at 300 °C for 2 h. After pretreatment, the sample was cooled to ambient temperature thereafter the TPR analysis was carried out in a reducing mixture (50 ml/min) consisting of 5% $H_2$ and balance Ar (Air Liquide) from ambient temperature to 900 °C (10 °C/min). The hydrogen concentration in the effluent stream was monitored by a thermal conductivity detector (TCD) and the $H_2$ consumption values were calculated from calibration experiments.

*Cu-zeolites, catalytic activity measurements*

The SCR activity measurements were carried out at atmospheric pressure in a fixed-bed quartz reactor loaded with 10 mg of fractionized (180-300 $\mu$m) catalyst samples positioned between two layers of inert quartz wool. The reactant gas composition was adjusted to 1000 ppm NO, 1100 ppm $NH_3$, 3.5% $O_2$, 2.3% $H_2O$ and balance $N_2$ by mixing 1% NO/$N_2$ ($\pm$0.1% abs.), 1% $NH_3$/$N_2$ (0.005% abs.), $O_2$ ($\geq$99.95%) and balance $N_2$ ($\geq$99.999%) (Air Liquide) using Bronkhorst EL-Flow F-201 C/D mass-flow controllers. The total flow rate was maintained at 500 ml/min (ambient conditions). Further studies with $SO_2$ were not performed on these catalysts since biomass fired straw or wood chips have a very low content of sulphur. During the experiments the temperature was increased stepwise from 200 to 600 °C while the NO and $NH_3$ concentrations were continuously monitored by a Thermo Electron's Model 17 C chemiluminiscent $NH_3$-$NO_x$ gas analyzer. The activity was measured after attaining steady state and care was taken not to reach conversions above 90% to keep the catalyst stressed. Fresh and poisoned catalysts are compared by change in relative activity (%) of the corresponding catalysts. The Cu-zeolite catalysts are further compared with an industrial $V_2\overline{O}_5$/W$\overline{O}_3$-Ti$\overline{O}_2$(VWT) catalyst (3% $V_2O_5$-9% $WO_3$) which also was poisoned at similar concentration levels of potassium.

*Comparison example: Cu-Zeolite catalysts prepared by ion-exchange method and their SCR activity.*

Cu-zeolite catalysts were prepared by the ion-exchange method. Commercial zeolite supports HZSM5 (Si/Al=15 and 500 $m^2$/g), HMOR (Si/Al=10 and 400 $m^2$/g) and HBEA (Si/Al=$_{25}$ and 680 $m^2$/g) were purchased from Zeolyst International. 2 g of zeolite sample was added to 1 liter of 2 mM copper nitrate (Aldrich, 99.99%) solution. The mixture was stirred for 24 h at 80 °C, whereafter the solid iron-exchanged zeolite catalyst was filtered off, washed there times with 1 liter water, dried at 120 °C for 12 h and finally calcined at 500 °C for 5 h. Catalysts prepared by this method are represented as Cu-ZSM5, Cu-MOR and Cu-BEA. Surface Cu content of the Cu-ZSM5, Cu-MOR and Cu-BEA catalysts measured by EDX analysis were found to be 2.7, 2.9 and 3.4 wt.%, respectively.

SCR activity:

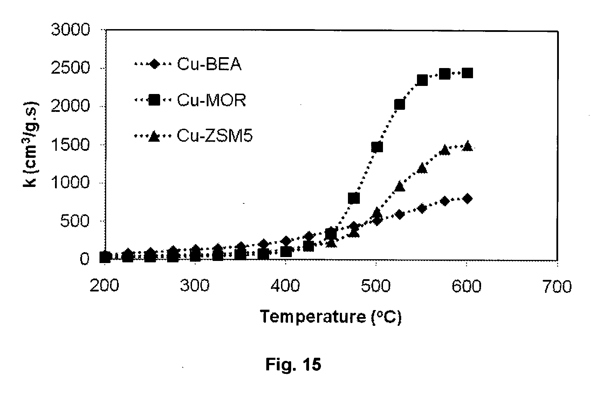

The catalytic activity of Cu-zeolite catalysts from 200-600 °C is reported in Fig.15 by the rate constant k ($cm^3$/g.s). The Cu-MOR, Cu-ZSM5 and Cu-BEA catalysts showed maximum rate constant values of 2450, 1512 and 816, respectively. All the catalyst reached maximum activity around 600 °C. Compared to the incipient wet impregnated method reported in Fig.5, ion-exchange Cu-zeolite catalysts shifted $T_{max}$ performance to higher temperatures and rate constant values were lower. This shows that the SCR activity of Cu-zeolite catalysts is dependent on the catalyst preparation method.

***Fe-zeolite catalyst preparation and characterization***

Fe-zeolite catalysts were prepared by ion-exchange methods. Commercial zeolite supports HZSM5 (500 $m^2$/g), HMOR (400 $m^2$/g) and HBEA (680 $m^2$/g) were purchased from Zeolyst International. In the ion-exchange method 2 g of zeolite sample was added to 1 liter of 2 mM iron (III) nitrate nonahydrate (Aldrich, 99.99%) solution. The mixture was stirred for 24 h at 80 °C, where after the solid iron-exchanged zeolite catalyst was filtered off, washed there times with 1 liter water, dried at 120 °C for 12 h and finally calcined at 500 °C for 5 h. Catalysts prepared by this method are represented as Fe-ZSM5, Fe-MOR and Fe-BEA.
Poisoning of iron-exchanged catalysts were done by incipient wet impregnation method with 0.05-0.15 M solution of potassium nitrate (Aldrich, 99.99%) to obtain a potassium loading of 100, 250 and 500 $\mu$mol/g, respectively. The prepared catalysts were oven dried at 120 °C for 12 h and finally calcined at 500 °C for 5 h before use. Catalysts doped with 500 $\mu$mol/g of potassium are represented as K-Fe-ZSM5, K-Fe-MOR and K-Fe-BEA, respectively.

***Fe-zeolites, catalyst characterization***

BET surface area of the samples was determined from nitrogen physisorption measurements on about 100 mg sample at liquid nitrogen temperature with a Micromeritics ASAP 2010 instrument. The samples were heated to 200 °C for 1 h prior to measurement. Surface composition of Fe was estimated with an Oxford INCA EDX analyzer.
EPR spectra of the catalysts were recorded ex-situ with a Bruker EMX-EPR spectrometer, working at the X-band (Bruker ER 041 XGG Microwave Bridge) at microwave frequencies around 9.75 GHz. The measurements were done at room temperature on samples transferred directly after calcination into excicator. Data treatment was performed with W IN-EPR software provided by Bruker.
$NH_3$-TPD experiments were conducted on a Micromeritics Autochem-II instrument. In a typical TPD experiment, about 100 mg of dried sample was placed in a quartz tube and pretreated in flowing He at 500 °C for 2h. Then, the temperature was lowered to 100 °C and the sample was treated with anhydrous $NH_3$ gas (Air Liquide, 5% $NH_3$ in He). After $NH_3$ adsorption, the sample was flushed with He (50 ml/min) for 100 min at 100°C. Finally, the TPD operation was carried out by heating the sample from 100 to 950 °C (10 °C/min) under a flow of He (25 ml/min).
$H_2$-TPR studies were also conducted on a Micromeritics Autochem-II instrument. In a typical experiment, 100 mg of oven-dried sample was placed in one arm of a U-shaped quartz sample tube on a quartz wool plug. Prior to TPR, the catalyst sample was pretreated by flushing with air at 300 °C for 2 h. After pretreatment, the sample was cooled to ambient temperature and the TPR analysis carried out in a reducing mixture (50 ml/min) consisting of 5% $H_2$ and balance Ar (Air Liquide) from ambient temperature to 1000 °C (10 °C/min). The hydrogen concentration in the effluent stream was monitored by a thermal conductivity detector (TCD) and the $H_2$ consumption values were calculated from calibration experiments.

***Fe-zeolites, catalytic activity measurements***

The SCR activity measurements were carried out at atmospheric pressure in a fixed-bed quartz reactor loaded with 30 mg of fractionized (180-300 $\mu$m) catalyst samples positioned between two layers of inert quartz wool. The reactant gas composition was adjusted to 1000 ppm NO, 1100 ppm $NH_3$, 3.5% $O_2$, 2.3% $H_2O$ and balance $N_2$ by mixing 1% $NO/N_2$ ($\pm$0.1% abs.), 1% $NH_3/N_2$ (0.005% abs.), $O_2$ ($\geq$99.95%) and balance $N_2$ ($\geq$99.999%) (Air Liquide) using Bronkhorst EL-Flow F-201C/D mass-flow controllers. The total flow rate was maintained at 500 ml/min (ambient conditions). During the experiments the temperature was increased stepwise from 200 to 600 °C while the NO and $NH_3$ concentrations were continuously monitored by a Thermo Electron Model 17C chemiluminiscent $NO$-$NO_x$ gas analyzer.

***Comparison example: 3 wt. % Fe-Zeolite catalysts prepared by incipient wet impregnation and their SCR activity.***

3wt.% Fe-zeolite catalysts were prepared by incipient wet impregnation using appropriate amounts of iron nitrate (Aldrich, 99.9%) as a precursor and HZSM5 (Si/Al=15 and 500 $m^2$/g), HMOR (Si/Al=$_{10}$ and 400 $m^2$/g) or HBEA

(Si/Al=25 and 680 m$^2$/g), respectively as supports (Zeolyst International). The prepared catalysts were oven dried at 120 °C for 12 h and finally calcined at 550 °C for 5 h.

<u>SCR activity:</u>

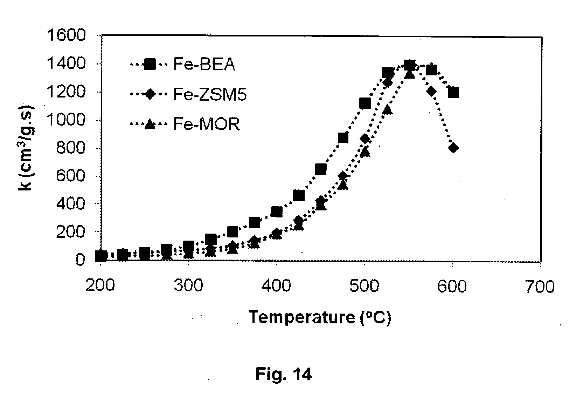

The catalytic activity of 3 wt.% Fe-zeolite catalysts from 200-600 °C is reported in Fig.14 by the rate constant k (cm$^3$/g.s). The Fe-BEA catalyst reached maximum activity about 525 °C while Fe-ZSM5 and Fe-MOR catalysts reached maximum around 550 °C and 575 °C, respectively. All catalysts yielding rate constant around 1400 cm$^3$/g.s at their respective maximum temperatures. Compared to the ion-exchange method reported in Fig.10, incipient wet impregnated Fe-Zeolite catalysts shifted $T_{max}$ performance to higher temperatures and rate constant values were lower. This shows that the SCR activity of Fe-Zeolite catalysts is dependent on the catalyst preparation method.

***Representation of catalytic activity***

For both the Cu- and Fe-zeolite catalysts, the catalytic activity is represented as the first-order rate constant (cm$^3$/g·s), since the SCR reaction is known to be first-order with respect to NO under stoichiometric NH$_3$ conditions [see eg. R.Q. Long et al. J. Catal. 196 (2000) 73, J.P. Chen et al. J. Catal. 125 (1990) 411, A.L. Kustov et al. Appl. Catal. B 58 (2005) 97, J. Due-Hansen et al. J. Catal. 251(2007) 459. J. Due-Hansen et al. Appl. Catal. B 66 (2006) 161].
The first-order rate constants where obtained from the conversion of NO as:

$$k = - (F_{NO} / (m_{cat} \cdot C_{NO})) \ln (1-X) \qquad (1)$$

where $F_{NO}$ denotes the molar feed rate of NO (mol/s), $m_{cat}$ the catalyst mass, $C_{NO}$ the NO concentration (mol/cm$^3$) in the inlet gas and X the fractional conversion of NO.

**Results and discussion - Cu zeolites**

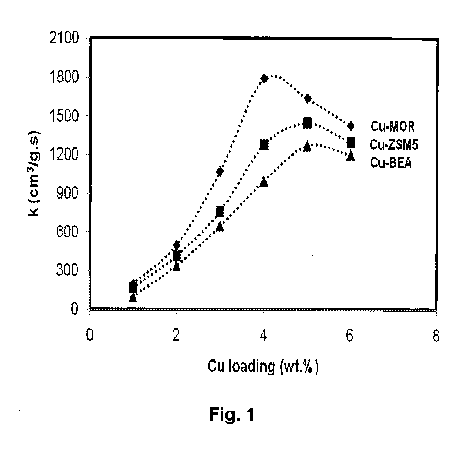

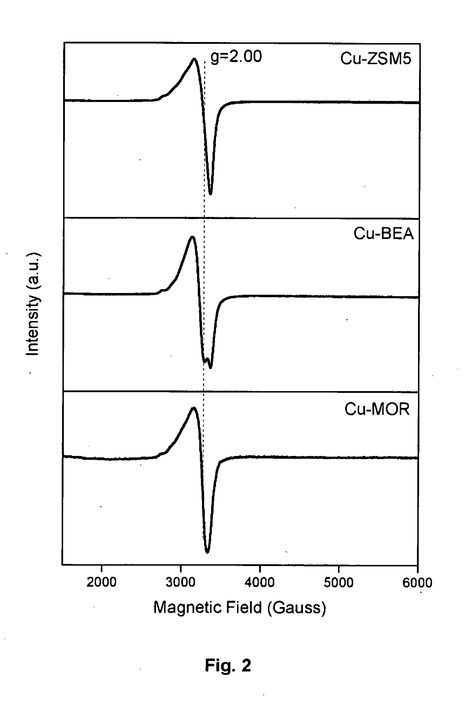

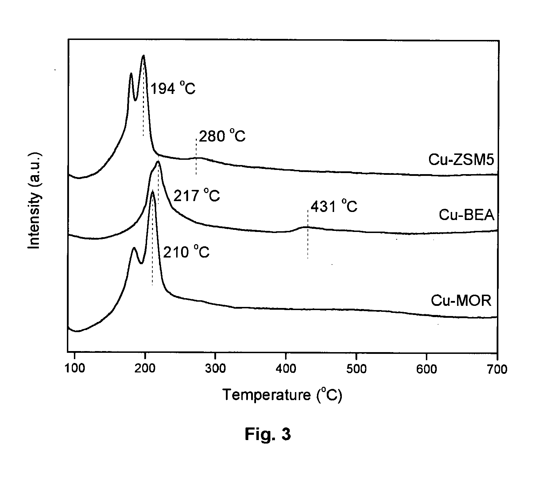

The SCR activities of the Cu/zeolite catalysts at 400 °C are reported in Fig. 1 as a function of Cu loading. Gradual increase in Cu loading enhanced the SCR activity which reaches a maximum while further increase of Cu loading leads to a gradually decrease of the SCR activity. An optimum content of 4 wt.% Cu for HMordenite (Cu-MOR) and 5 wt.% Cu for HZSM5 (Cu-ZSM5) and HBETA (Cu-BEA) catalysts were observed. This optimum Cu content is dependent on various properties like Si/Al ratio, surface area and pore size of the zeolites for achieving monolayer formation. Optimized Cu-MOR, Cu-ZSM5 and Cu-BEA catalysts showed rate constant values of 1789, 1448 and 1275 cm$^3$/g.s, respectively. These values are higher than observed for the industrial V$_2$O$_5$/W/O$_3$-TiO$_2$ (500 cm$^3$/g.s) and the V$_2$O$_5$/Sulphated-ZrO$_2$ catalysts (430 cm$^3$/g·s) at 400 °C [J. Due-Hansen et al. J. Catal. 251 (2007) 459.].
HMORDENITE Si/Al ratio influence on SCR activity was reported (G.G.Park et al., Microporous and Mesoporous Materials 48 (2001) 337-343) for Mordenite type zeolite catalysts having a Si/Al ratio of 5, 10 and 20). The SCR activity of the catalyst at 200 °C was found to be almost constant (70%) for CUHM5 and CUHM10, whilst the CUHM20 catalyst only showed 35% conversion at 200 °C. There thus seems to be a gradual decrease in SCR activity going from a Si/Al ratio 5 to 20.
The samples prepared by impregnation were calcined in air. After calcination, most copper existed as copper oxide and cupric ions on the outer shells of the zeolite crystals. EPR spectroscopy has been extensively used to probe the structural environment of paramagnetic copper sites in zeolites. Fig. 2 shows the EPR spectra of the optimum Cu/zeolite catalysts at room temperature. In these catalysts, Cu$^{2+}$ species are considered responsible for the dominant contribution to the spectra. The catalysts showed isotropic signals in the room temperature EPR spectrum, with no resolvable Cu$^{2+}$ splitting. This behavior is characteristic of Cu$^{2+}$ species in zeolite cavities [A.V. Kucherov et al., J. Catal. 157 (1995) 603].
H$_2$-TPR is frequently used to study the redox property of metal oxide catalysts. In Fig. 3 the TPR patterns of optimum Cu/zeolite catalysts are shown. Fresh Cu/zeolite catalysts showed a major peak around 200 °C and a shoulder peak at 280 °C and 431 °C for Cu-ZSM5 and Cu-BEA, respectively. Before proceeding with the assignment of these peaks to a specific reduction process and Cu$^{2+}$ species, the amount of H$_2$ consumed (H$_2$/Cu) is first considered. The H$_2$/Cu ratio values, measured by the integration of the area of the TPR signals, are reported in Table 1. The value of this ratio for the fresh Cu/zeolite samples are very close to 1, suggesting that copper is mainly present as Cu$^{2+}$ in the starting materials.

**Table 1 - H$_2$-TPR of Cu-Zeolite catalysts**

| Catalyst | H$_2$/Cu ratio | | Reduction temp. T$_{max}$ (°C) | |
|---|---|---|---|---|
| | Fresh | K-doped[1] | Fresh | K-doped[1] |
| Cu-MOR | 1.00 | 0.96 | 210 | 203 |
| Cu-BEA | 0.95 | 0.93 | 431 | 429 |
| Cu-ZSM5 | 1.00 | 0.92 | 280 | 274 |

[1]K-doped catalysts are prepared with 500 $\mu$mol/g of potassium

Bulk copper oxide exhibits only one TPR peak attributed to direct reduction of Cu$^{2+}$ ions to Cu$^0$ [Á. Szegedi et al.Appl. Catal. A 272 (2004) 257, B. Wichterlova et al. Appl. Catal. A 103 (1993) 269, M. Richter et al. Appl. Catal. B 73 (2007) 269]. Oxide-supported copper shows an analogous reduction behavior [A. Szegedi et al. Appl. Catal. A 272 (2004) 257]. However, in the case of zeolites a two stage reduction is usually observed (Cu$^{2+}$ to Cu$^+$ followed by Cu$^+$ to Cu$^0$). Patterns generally similar to ours have been reported for Cu-BEA [R. Kefirov et al. Micropor. Mesopor. Mater 116 (2008) 180] and Cu-ZSM-5 [C. Torre-Abreu et al. Catal. Today 54 (1999) 407, M.F. Ribeiro et al. Appl. Catal. B 70 (2007) 384, M.J. Jia et al. J. Mol. Catal. A 185 (2002) 151]. In general, the reduction temperature depends on the interaction of CuO with the support. We have assigned the sharp low temperature reduction peak to the reduction of highly dispersed CuO aggregates from Cu(II) ions to Cu(I), and the second shoulder peak to the reduction of the Cu(I) species that strongly interact with the exchange sites of zeolite [B. Coq et al. Appl. Catal. B 6 (1995) 271.]. However, Cu-MOR catalyst showed only a low-temperature reduction peak at 210 °C which could indicate direct reduction of Cu$^{2+}$ ions to Cu$^0$. One stage reduction of Cu$^{2+}$ ions to Cu$^0$ have also been observed on other Cu/zeolites [S. Kieger et al. J. Catal. 183 (1999) 267, W. Grünert et al. J. Phys. Chem. 98 (1994) 10832].

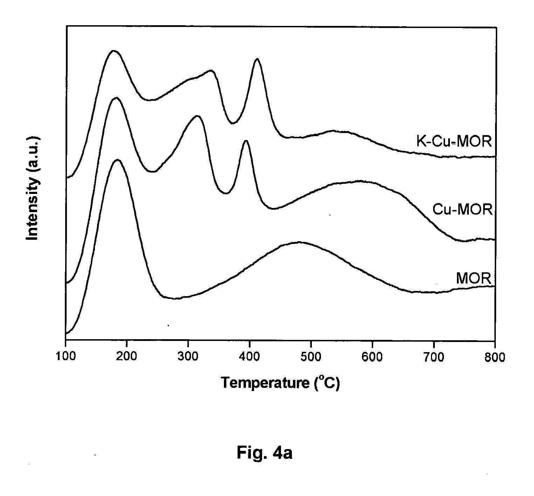

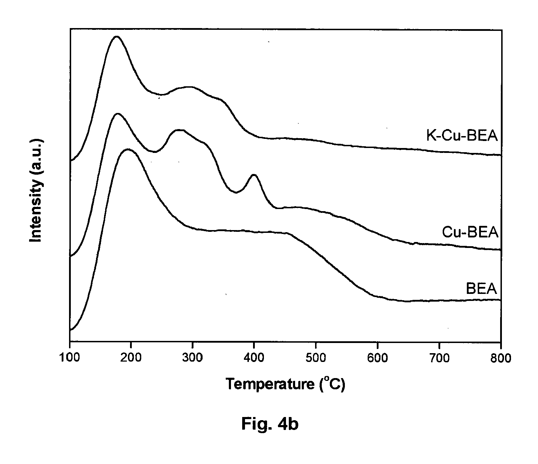

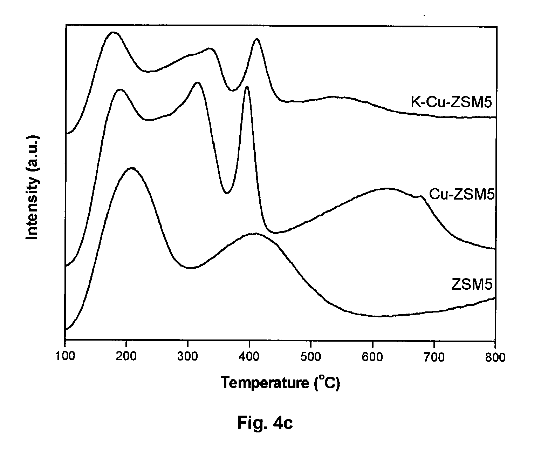

NH$_3$-TPD is a frequently used method for determining the surface acidity of solid catalysts as well as acid strength distribution. Fig. 4 shows NH$_3$-TPD profiles of pure zeolites and Cu/zeolite catalysts in the temperature range 100-800 °C. The results of the NH$_3$-TPD measurements are summarized in Table 2.

**Table 2 - Catalyst composition and NH$_3$-TPD of Cu/Zeolite catalysts**

| Catalyst | Si/Al | Cu wt% | K/Cu | Cu/Al | Acidity | | |
|---|---|---|---|---|---|---|---|
| | | | | | zeolite | Cu-zeolite | K-doped[1] |
| Cu-MOR | 10 | 4.0 | 0.80 | 0.44 | 1418 | 1908 | 1064 |
| Cu-ZSM5 | 15 | 5.0 | 0.64 | 0.78 | 1062 | 1408 | 823 |
| Cu-BEA | 25 | 5.0 | 0.64 | 1.26 | 1008 | 1702 | 1028 |

[1]K-doped catalysts are prepared with 500 $\mu$mol/g of potassium

Generally, pure zeolites showed two ammonia desorption regions; one due to weak acid strength and the other due to moderate acid strength. The weak acid sites were observed at lower temperatures around 200 °C, while the moderate acid sites were observed between 400-500 °C. The total acidity of the pure zeolites follow the order MOR>ZSM5>BEA. After impregnating Cu on zeolites two extra desorption peaks were observed between weak and moderate acid site shifting the moderate acid site desorption peak to high temperature, while that of the weak acid site remains at the same position. The extra desorption peaks are resulting from the decomposition of the copper ammonia complex at around 320 °C [A.V. Salker et al. Appl. Cat A 203 (2000) 221].

According to the results of ammonia-TPD (Table 2), the total acidity of the Cu/zeolites is: Cu-MOR>Cu-BEA>Cu-ZSM5. Introduction of Cu leads to an increase of the total amount of desorbed ammonia. The difference between the amounts of NH$_3$ desorbed from the Cu/zeolite and the corresponding zeolite is ascribed to the formation of complexes by interaction between ammonia molecules and copper cations. If this value is normalized to the copper content it would provide information about the average stoichiometry of NH$_3$ adsorption on copper species. The $\Delta$NH$_3$/Cu ratio of the catalysts is: Cu-BEA (0.88)>Cu-MOR (0.78)>Cu-ZSM5 (0.44). The increase in NH$_3$ desorption observed on Cu-BEA compared to that of Cu-MOR and Cu-ZSM5 catalyst could be due to large pore size. It is expected that the large pore zeolites have improved accessibility of the Cu-species which are more available for ammonia adsorption.

Activity vs. temperature of Cu-MOR, Cu-ZSM5 and Cu-BEA catalysts are shown in Fig. 5 at various potassium loadings. Cu-MOR, Cu-ZSM5 and Cu-BEA catalysts showed maximum rate constant values of 2542, 2315 and 2646 at their T$_{max}$ of 425, 450 and 500 °C, respectively. All the catalysts showed high rate constants at the different T$_{max}$. The different T$_{max}$, exhibited during the SCR of NO seems to be a function of ease of reduction of copper oxide during the reduction cycle (Table 1). Cu-MOR, Cu-ZSM5 and Cu-BEA catalysts showed maximum reduction temperatures at 210, 280 and 429 °C, respectively. This trend could be the reason for the variation in $T_{max}$. Irrespective of the $T_{max}$ obtained the rate constants observed on these Cu/zeolites are much higher than for commercial vanadium based catalysts.

The potassium poisoned catalysts showed decreased SCR activity with increasing K/Cu molar ratios. At low K/Cu molar ratio up to 0.20 essentially no influence on the SCR activity was observed and only upon further increase of potassium concentration a slight decrease in activity was observed. The superior performance of these catalysts can be observed even at high potassium concentrations, whereas conventional catalysts like, e.g. $V_2O_5/WO_3$-$TiO_2$, $V_2O_5$/Sulphated-$ZrO_2$ and $V_2O_5/WO_3$-$ZrO_2$ are poisoned severely at a K/V molar ratio of 0.3 where the active hydroxy vanadates are transferred to potassium vanadates [J.P. Chen et al. J. Catal. 125 (1990) 411, J. Due-Hansen et al. J. Catal. 251 (2007) 459, Y. Zheng et al. Ind. Eng. Chem. Res. 43 (2004) 941, A.L. Kustov et al. Appl. Catal. B 58 (2008) 97].

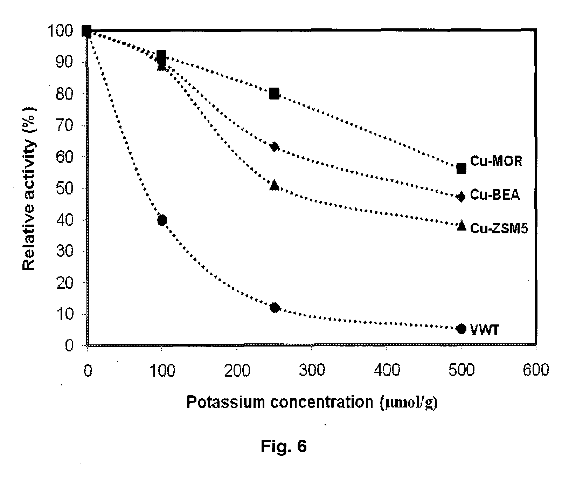

The relative activity of Cu/zeolites and VWT catalysts with different potassium loadings is shown in Fig. 6 at 400 °C. All Cu/zeolite catalysts showed a similar relative activity of 90% at a loading of 100 $\mu$mol/g of potassium, while the VWT catalyst was perform ing only at 40 %. Upon further increase of the potassium concentration Cu-zeolites experienced a slight drop in relative activity in the order of Cu-MOR<Cu-BEA<Cu-ZSM5 while the VWT catalyst was deactivated severely.

Potassium poisoned $V_2O_5/TiO_2$ catalysts can change redox and acidic properties. Kamata et al. [H. Kamata et al. J. Mol. Catal. A 139 (1999) 189.] made an infrared spectroscopic study, which showed that the addition of $K_2O$ to the catalyst modified the structure of the surface vanadium species. $K_2O$ added to the catalyst might also partially react with $V_2O_5$ to form $KVO_3$. It has also been shown that $K_2O$ directly coordinates with the surface vanadium oxide phase [G. Deo, I.E. Wachs, J. Catal. 146 (1994) 335, J.P. Dunn et al. J. Catal. 181 (1999) 233.]. Progressive addition of $K_2O$ to $V_2O_5$-$TiO_2$ catalyst gradually titrates the surface vanadium oxide sites. Several authors [J.P. Chen et al. J. Catal. 125 (1990) 411, H. Kamata et al. J. Mol. Catal. A 139 (1999) 189, D.A. Bulushev et al. Langmuir 17 (2001) 5276] have reported the effect of alkaline metals on the activity of $V_2O_5/TiO_2$ catalysts. Most of them conclude that poisonous additives are affecting the Bronsted acid sites which are responsible for the ammonia adsorption, thus decreasing both their number and activity in NO reduction. For the commercial vanadium catalyst the potassium poisoning is very sever due to the change of the active vanadium phase and loss of Brønsted acid sites.

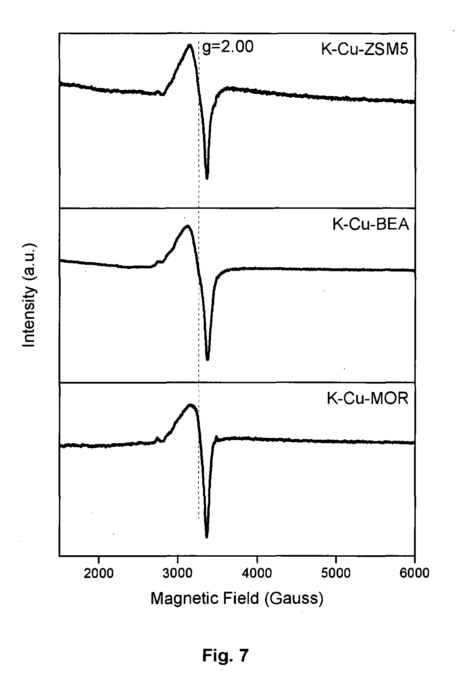

When doping the Cu/zeolites with potassium (500 $\mu$mol/g) a slight decrease in catalytic activity occured. Detailed characterization of these deactivated Cu/zeolite catalysts with EPR, $H_2$-TPD and $NH_3$-TPD techniques could give further information on the actual cause of deactivation. Fig. 7 shows the EPR spectra of K-Cu/zeolite catalysts at room temperature. The catalysts showed $Cu^{2+}$ species even after deactivation which indicates that the copper species are not altered due to presence of potassium.

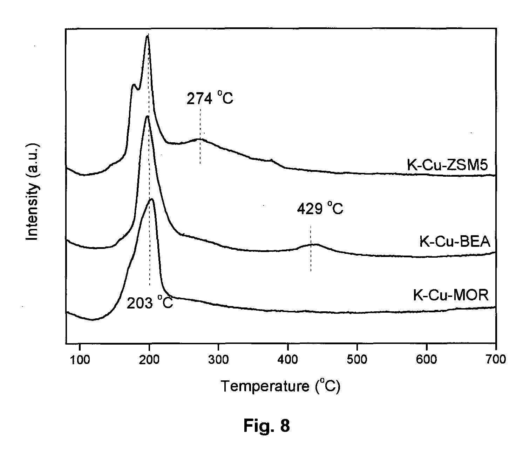

Fig. 8 shows the $H_2$-TPR patterns of potassium doped Cu/zeolite catalysts. Fresh and potassium doped catalysts looked very similar except a slight change in reduction temperatures. The $H_2$/Cu ratio values are reported in Table 1. The value of this ratio for the potassium doped Cu/zeolite samples is very close to 1, suggesting that copper is still present as $Cu^{2+}$ before the reduction. This could further indicate that the redox properties of the Cu/zeolite catalysts are not altered.

Fig. 4 shows $NH_3$-TPD profiles also for the potassium doped Cu/zeolite catalysts. The intensities of the peaks were slightly decreased and $T_{max}$ position of the moderate acid site moved to lower temperature when compared to the fresh catalysts. This indicates that there is a decrease in the number of acid sites and the acid strength. The acidity of the potassium poisoned catalysts were: Cu-MOR>Cu-BEA>Cu-ZSM5. Even at high potassium loadings (K/Cu 0.80 or 0.64) the catalysts showed significant surface acidity, while $V_2O_5$ supported metal oxide catalysts losses the surface acidic sites at a K/V ratio of 0.3 [J.P. Chen et al. J. Catal. 125 (1990) 411, J. Due-Hansen et al. J. Catal. 251 (2007) 459, Y. Zheng et al. Ind. Eng. Chem. Res. 43 (2004) 941, A.L. Kustov et al. Appl. Catal. B 58 (2008) 97]. This two-fold increased potassium resistivity is most probably due to the unique support properties of zeolites with high surface area and acidity compared to conventional metal oxide carriers. Doping all the catalysts with similar amount of potassium (500 $\mu$mol/g) a loss of 844, 674 and 585 $\mu$mol/g of acid sites were found on Cu-MOR, Cu-BEA and Cu-ZSM5 catalysts, respectively. The acid sites titration with potassium is directly proportional to the initial surface acidity of the catalyst. SCR active metals on zeolites might thus be well protected from potassium poisoning by the numerous acidic sites on the carrier attracting the potassium salts.

## Results and discussion - Fe zeolites (not forming part of this invention)

Table 3 shows the surface Fe content of the catalysts measured by EDX analysis. Fe-MOR, Fe-ZSM5 and Fe-BEA catalysts were found to be have Fe composition of 3.0, 3.2 and 5.6 wt.%, respectively. In general, the metal exchange capacity of a zeolite is a function of both the Si/Al ratio, surface area and pore size [S.S.R. Putluru et al. Appl. Catal. B 97 (2010) 333]. In iron-exchanged zeolites Fe cations are located in coordinative unsaturated sites that are accessible to reactant gases with the cations being stabilized in specific environments and oxidation states that may be essential for the catalytic activity. Accordingly, it is important to characterize the local electronic environment of the Fe exchanged zeolites. EPR spectroscopy allows to examine such environments and has been used here to probe the iron ($Fe^{2+}$, $d^6$; $Fe^{3+}$, $d^5$) exchanged into the zeolites.

**Table 3 Characterization results of Fe-Zeolite catalysts**

| Catalyst | Si/Al | Fe wt%[2] | K/Fe | Fe/Al | Acidity | | |
|---|---|---|---|---|---|---|---|
| | | | | | zeolite | Fe-zeolite | K-doped[1] |
| Fe-MOR | 10 | 3.0 | 0.93 | 0.38 | 1418 | 1837 | 905 |
| Fe-ZSM5 | 15 | 3.2 | 0.87 | 0.58 | 1062 | 1286 | 660 |
| Fe-BEA | 25 | 5.6 | 0.49 | 1.60 | 1008 | 1242 | 637 |

[1]K-doped catalysts are prepared with 500 $\mu$mol/g of potassium
[2]Fe-content measured by EDX analysis

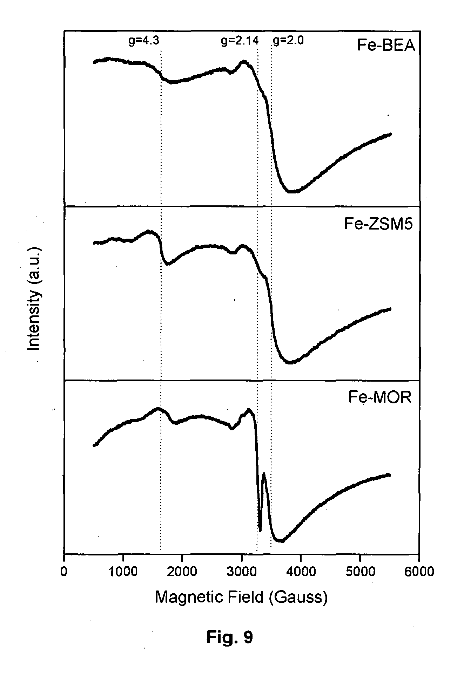

X-band EPR spectra of $Fe^{3+}$-containing zeolites usually consist of three different signals: a sharp signal with g = 4.3, a broad signal with g = 2.0-2.3 and a very sharp signal with g = 2.0 [M. Schwidder et al. J. Catal. 231 (2005) 314-330, D. Goldfarb et al. J. Am. Chem. Soc. 116 (1994) 6344]. The commonly accepted assignments of the three signals are: framework iron (tetrahedral lattice $Fe^{3+}$ ions), iron oxide cluster with $Fe^{3+}$ neighbours, and iron oxide clusters in cation exchange sites (isolated $Fe^{3+}$ ions or $FeO_x$ oligomers), respectively. Fig.9 shows EPR spectra of the prepared Fe-zeolite catalysts recorded at room temperature. All the catalysts exhibited relatively small absorbance at low filed g = 4.3, and dominated with $Fe^{3+}$ signals of g = 2.0-2.3 and g = 2.0. This suggest that a significant amount of the Fe were dispersed as isolated $Fe^{3+}$ or $Fe^{3+}$ neighbours, and only a small amount were present as framework iron. Especially the sharp peak at g = 2.0-2.3 on the Fe-MOR catalyst could indicate dominant iron oxide clusters with $Fe^{3+}$ neighbours. The potassium-doped catalysts showed similar patterns suggesting that potassium interaction with the iron was small (if present at all).

The catalytic activity of undoped and potassium-doped Fe-zeolite catalysts from 200-600 °C is reported in Fig.10 by the rate constant k ($cm^3$/g.s). The Fe-BEA catalyst reached maximum activity about 500 °C while Fe-ZSM5 and Fe-MOR catalysts reached maximum around 525 °C yielding rate constant around 1600 $cm^3$/g.s above 450 °C. These $T_{max}$ activities were higher than that obtained with commercial vanadium catalysts under optimal reaction conditions i.e. (420 °C) [A.L. Kustov et al. Appl. Catal. B 58 (2005) 97, J. Due-Hansen et al. J. Catal. 251(2007) 459, J. Due-Hansen et al. Appl. Catal. B 66 (2006) 161]. Generally, Fe-zeolite catalysts obtain their maximum activity over a wide temperature range between 425-575 °C, whereas vanadium-based formulations perform best in a much narrower temperature range from 375-425 °C. Consequently, Fe-zeolite catalysts with high activity and a wider range of operating temperatures could also prove applicable for automotive applications.

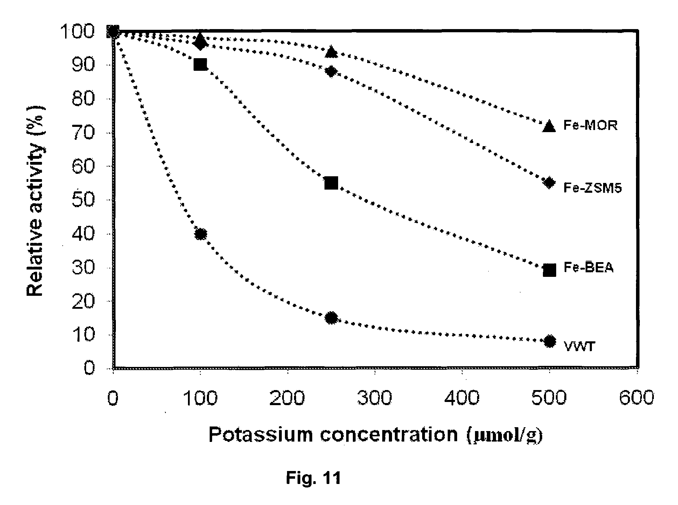

The potassium-doped Fe-zeolite catalysts with a maximum potassium concentration of 500 $\mu$mol/g of catalyst showed decreased catalytic activity compared to that of the fresh catalysts in the order: K-Fe-MOR (780 $cm^3$/g.s) > K-Fe-ZSM5 (680 $cm^3$/g.s) > K-Fe-BEA (300 $cm^3$/g.s) at 525 °C. Fig.11 shows the relative activity of potassium-doped Fe-zeolite catalysts and commercial vanadium catalyst with different potassium loadings at 400 °C, which is a normal operation temperature in commercial stationary SCR units. It was observed that with increase of potassium concentration from 0-500 $\mu$mol/g a gradual decrease in the relative activity of Fe-zeolite catalysts occurred, while the commercial VWT catalyst deactivated rapidly even at lower potassium concentration. Hence, with 100 $\mu$mol/g of potassium loading the Fe-zeolite catalysts still showed about 90% (or more) of their original activity, whereas the activity of the commercial VWT catalyst had decreased by 60%. Upon further increase in potassium concentration Fe-MOR and Fe-ZSM5 maintained a superior alkali resistivity compared to that of Fe-BEA which, however, still performed significantly better than the commercial VWT catalyst, which only maintained about 10% of its activity under these reaction conditions. Supplementary activity studies with $SO_2$ containing reaction gas were not performed with the Fe-zeolite catalysts since biomass (e.g. straw or wood chips) contain very low concentration of sulphur [N. Afgan et al. Int. J. Sustain. Energy. 26 (2007) 179].

SCR of NO with ammonia is a feasible reaction on a catalyst having optimal redox and acidic properties. The difference in acidic and redox properties of the freshly prepared and the potassium poisoned catalysts could give more insight about the observed catalyst deactivation. $NH_3$-TPD is a frequently used method for determining the surface acidity of solid catalysts as well as the acid strength distribution [S.S.R. Putluru et al. Appl. Catal. B 97 (2010) 333, G.I. Kapustin et al. Appl. Catal. 42 (1988) 240]. Surface acidity of the zeolites, the Fe-zeolite catalysts and the potassium doped Fe-zeolites catalysts are reported in Table 3. Acidity of the pure zeolites were in the order of MOR > ZSM5 > BEA. This order remained also upon Fe exchange into the zeolites, where the acidity increased even further by around 20%. Due to the pronounced acidity originating from the support these are promising acid scavenging materials for alkali resistant SCR applications.

The acidity of the potassium poisoned catalysts were also found to be in the order of K-Fe-MOR > K-Fe-ZSM5 > K-Fe-BEA, as expected. However, after doping with potassium (500 $\mu$mol/g of catalyst) Fe-MOR, Fe-ZSM5 and Fe-BEA catalysts lost surface acidic sites of 932, 626 and 605 $\mu$mol/g of catalyst, respectively, corresponding to about half their acidic sites. Thus, overall the Fe-zeolite catalysts maintained appreciable surface acidity also at high potassium concentration. In comparison, the commercial vanadium catalyst loos all surface acidic sites even at low potassium concentration of 100 $\mu$mol/g of catalyst [A.L. Kustov et al. Appl. Catal. B 58 (2005) 97, J. Due-Hansen et al. J. Catal. 251(2007) 459, J. Due-Hansen et al. Appl. Catal. B 66 (2006) 161]. This superior potassium resistivity is directly related to the high surface area and acidity of the zeolite supports as compared to those of conventional metal oxides like, e.g. $ZrO_2$ and $TiO_2$, since these characteristics allow the SCR active metals to be well protected from the potassium poisions by exposing the dense acidic sites as hosts.

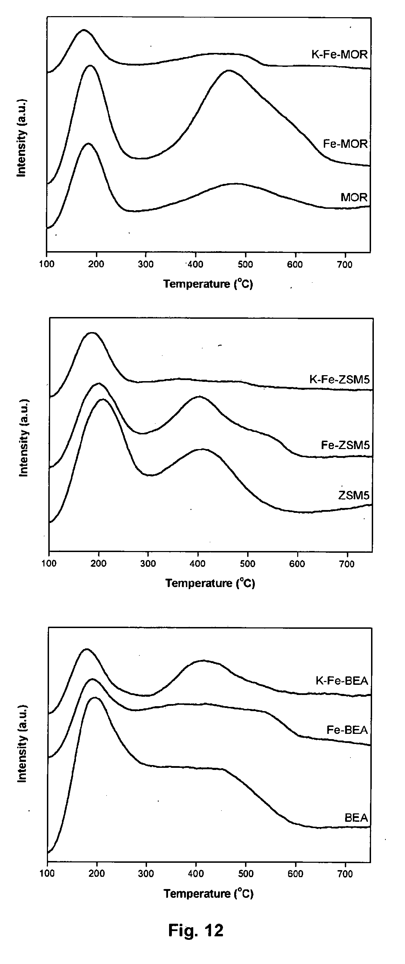

Fig. 12 shows $NH_3$-TPD profiles of the zeolites, Fe-zeolites and K-Fe-zeolite catalysts in the temperature range 100-750 °C. All the catalysts showed two desorption profiles: one due to moderate acid strength ($T_{max}$ between 350-600 °C) and an other due to weak acid strength ($T_{max}$ around 200 °C). In accordance with literature, the peak between 350-600 °C corresponds to $NH_3$ strongly adsorbed on strong acid sites (Brønsted and /or Lewis) [G.I. Kapustin et al. Appl. Catal. 42 (1988) 240, L.J. Lobree et al. J. Catal. 186 (1999) 242, I. Melian-Cabrera et al. J. Catal. 238 (2006) 250]. The peak at around 200 °C has been attributed to weakly adsorbed $NH_3$ on Bronsted acid sites [G.I. Kapustin et al. Appl. Catal. 42 (1988) 240, L.J. Lobree et al. J. Catal. 186 (1999) 242] or extra-framework Al [L.J. Lobree et al. J. Catal. 186 (1999) 242]. TPD patterns of the pure zeolite supports have a weak acid site with a more narrow and intense profile than that of moderate acid sites with broader profile. Upon Fe exchange the intensities of the moderate acid site peaks are increased while the intensities of the peaks from the weak acid sites remain more or less unchanged. After doping with 500 $\mu$mol/g of potassium the moderate acidic sites are drastically decreased, as expected, and the weak acid sites only slightly effected. This clearly indicates that the potassium is preferentially attacking the moderate acid sites and only moderately the weak acidic sites.

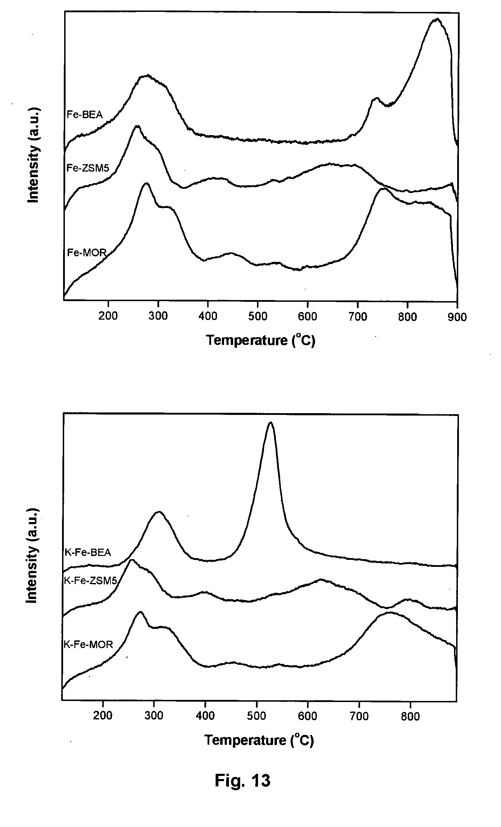

The redox properties of the Fe-zeolite and K-Fe-zeolite catalysts were also characterized by $H_2$-TPR method. The obtained results are shown in Fig.13. The reduction of Fe species on the Fe-zeolites started at 200 °C and continued till 1000 °C with profiles broadly divided into three regions; low temperature reduction region between 200-400 °C, medium temperature reduction region between 500-700 °C and high temperature reduction region above 800 °C. The low temperature reduction peak can be attributed to the reduction of $Fe^{3+}$ to $Fe^{2+}$ species, where $Fe^{3+}$ is located at the Brønsted acid sites of zeolite, as also reported on Fe-ZSM5 [R.Q. Long et al. J. Catal. 207 (2002) 274.]. This region had one intense reduction peak and a small shoulder peak on Fe-MOR corresponding to the reduction of iron species at two different sites as also observed on Fe-MOR catalysts prepared from FeCl2 [I. Melian-Cabrera et al.J. Catal. 238 (2006) 250]. The medium temperature reduction peak corresponded to reduction small nanoclusters of $Fe_3O_4$ to FeO and the high temperature reduction peak to $Fe^{2+}$ to $Fe^0$ along with zeolite framework collapse [A. Guzman-Vargas et al. Appl. Catal. B 42 (2003) 369]. As evident in Fig.13, $H_2$-TPR profiles of the Fe-zeolite changed slightly with type of support and amount of Fe content. Moreover, the potassium doped catalysts showed similar TPR profiles as that of fresh Fe-zeolite catalysts except a small change of the high temperature reduction peak of the K-Fe-BEA catalyst. Here the peak position was changed from 850 °C to 550 °C after doping with potassium, possibly due to reduction of formed potassium ferrate or potassium-containing iron. Previously it has been reported that potassium-containing iron substances are reduced between 600-700 °C [S.C. Ndlela et al. Ind. Eng. Chem. Res. 42 (2003) 2122]. Potassium ferrate formation was not observed on Fe-MOR and Fe-ZSM5, most likely because the support have sufficient acid sites to host the potassium thus protecting the active Fe.

**Claims**

1.  A method for providing a Cu-zeolite catalyst, consisting of the following steps:

    a) treating the zeolite support with a solution of a Cu precursor, using the incipient wet impregnation method and a suitable Cu precursor, followed by
    b) drying the obtained zeolite pre-catalyst at 120°C for 12 hours followed by calcination at 500 °C for 5 hours, thereby generating the finished catalyst,

    wherein said Cu precursor is copper nitrate, the zeolite support is HMORDENITE having a $SiO_2/Al_2O_3$ ratio between 5 and 40, and wherein said catalyst comprises 3-6% w/w Cu.

2.  The method according to claim 1 wherein the Cu precursor is copper nitrate (Aldrich, 99.99%).

3.  The method according to any one of claim 1 or 2, wherein the zeolite support is HMORDENITE (400 m$^2$/g).

**4.** The method according to any one of claim 1 or 2 wherein the zeolite support is HMORDENITE (400 m$^2$/g) obtained by protonation of the ammonia form CBV21A zeolite support from Zeolyst International by routine methods.

**5.** A zeolite catalyst obtainable by a method according to any one of the preceding claims.

**6.** A catalyst according to claim 5 which comprises 4% w/w Cu.

**7.** A catalyst according to any one of claims 5 or 6, wherein the catalyst is shaped as a monolith, extrudate, bead, plate, sheet or fibrous cloth.

**8.** Use of a catalyst according to any one of claims 5 to 7 in the selective removal of nitrogen oxides with ammonia from gases resulting from the burning of biomass, combined biomass-fossil fuel, or emerging from waste incineration units at a temperature from 320 to 550°C.

**9.** Use of a catalyst according to claim 8, wherein said gases contain between 10-15% H$_2$O.

**Patentansprüche**

**1.** Verfahren zum Bereitstellen eines Kupfer-Zeolith-Katalysators, bestehend aus den folgenden Schritten:

a) Behandlung des Zeolith-Trägers mit einer Lösung eines Kupfer-Vorläufers unter Verwendung des einleitenden Nassimprägnierungsverfahrens und eines geeigneten Kupfer-Vorläufers, gefolgt von
b) Trocknen des erhaltenen Zeolith-Vorkatalysators bei 120 °C für 12 Stunden, gefolgt von einer Kalzinierung bei 500 °C für 5 Stunden, wodurch der fertige Katalysator erzeugt wird,

wobei der Kupfer-Vorläufer Kupfernitrat ist, der Zeolith-Träger HMORDENITE ist, welches ein Verhältnis von SiO$_2$ zu Al$_2$O$_3$ von 5 bis 40 aufweist, und wobei der Katalysator 3-6 % Gew./Gew. Kupfer enthält.

**2.** Verfahren nach Anspruch 1, wobei der Kupfer-Vorläufer Kupfernitrat (Aldrich, 99,99 %) ist.

**3.** Verfahren nach einem der Ansprüche 1 oder 2, wobei der Zeolith-Träger HMORDENITE (400 m$^2$/g) ist.

**4.** Verfahren nach einem der Ansprüche 1 oder 2, wobei der Zeolith-Träger HMORDENITE (400 m$^2$/g) ist, welches durch Protonierung des Zeolith-Trägers der Ammoniakform CBV21A von Zeolyst International durch Routinemethoden erhalten ist.

**5.** Zeolith-Katalysator, welcher durch ein Verfahren nach einem der vorgehenden Ansprüche erhältlich ist.

**6.** Katalysator nach Anspruch 5, welcher 4 % Gew./Gew. Kupfer enthält.

**7.** Katalysator nach einem der Ansprüche 5 oder 6, wobei der Katalysator als ein Monolith, ein Extrudat, ein Kügelchen, eine Platte, eine Schicht oder ein faseriges Tuch gebildet ist.

**8.** Verwendung eines Katalysators nach einem der Ansprüche 5 bis 7 bei dem selektiven Entfernen von Stickoxiden mit Ammoniak aus Gasen, welche aus der Verbrennung von Biomasse, der Kombination Biomasse-fossilem Brennstoff resultieren, oder welche aus Müllverbrennungsanlagen bei einer Temperatur im Bereich von 320 bis 550 °C entstehen.

**9.** Verwendung eines Katalysators nach Anspruch 8, wobei die Gase 10 bis 15 % H$_2$O enthalten.

**Revendications**

**1.** Procédé pour fournir un catalyseur à base de zéolithe au cuivre, comprenant les étapes consistant:

a) au traitement du support de zéolite avec une solution d'un précurseur de Cu, en utilisant le procédé d'imprégnation à humidité naissante et un précurseur de Cu approprié, suivi par

b) le séchage du pré-catalyseur de zéolite obtenu à 120C° pendant 12 heures, suivi d'une calcination à 500C° pendant 5 heures, générant ainsi le catalyseur fini,

ledit précurseur de Cu étant le nitrate de cuivre, le support de zéolite étant HMORDENITE ayant un rapport de $SiO_2/Al_2O_3$ compris entre 5 et 40, et ledit catalyseur comprenant 3 à 6% en poids de Cu.

2. Procédé selon la revendication 1, dans lequel le précurseur de Cu est le nitrate de cuivre (Aldrich, 99.99%).

3. Procédé selon l'une quelconque des revendications 1 ou 2, dans lequel le support de zéolithe est HMORDENITE ($400 \text{ m}^2/\text{g}$).

4. Procédé selon l'une quelconque des revendications 1 ou 2, dans lequel le support de zéolithe est HMORDENITE ($400 \text{ m}^2/\text{g}$) obtenu par protonation du support de zéolithe d'ammonium de formule CBV21A provenant de Zeolyst International par des procédés de routine.

5. Catalyseur de zéolithe pouvant être obtenu par un procédé selon l'une quelconque des revendications précédentes.

6. Catalyseur selon la revendication 5, qui comprend 4% en poids de Cu.

7. Catalyseur selon l'une quelconque des revendications 5 ou 6, dans lequel le catalyseur est façonné en tant que monolithe, extrudât, talon, plaque, feuille ou tissu fibreux.

8. Utilisation d'un catalyseur selon l'une quelconque des revendications 5 à 7 dans l'élimination sélective des oxydes d'azote avec de l'ammonium à partir de gaz issus de la combustion de la biomasse, du combustible de biomasse fossile combinée, ou sortant d'unités d'incinération de déchets à une température comprise entre 320 et 550°C.

9. Utilisation d'un catalyseur selon la revendication 8, dans laquelle lesdits gaz contiennent entre 10 et 15% $H_2O$.

**Fig. 1**

**Fig. 2**

**Fig. 3**

**Fig. 4a**

Fig. 4b

**Fig. 4c**

Fig. 5

Fig. 6

**Fig. 7**

**Fig. 8**

**Fig. 9**

**Fig. 10**

**Fig. 11**

Fig. 12

Fig. 13

**Fig. 14**

**Fig. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7264785 B
- US 6528031 B1
- US 20080127638 A1
- US 7005116 B2
- US 5059569 A1
- US 20070134146 A1
- US 5260043 A1
- US 20100075834 A1
- DE 3722081

**Non-patent literature cited in the description**

- **H. BOSCH et al.** *Catal. Today,* 1988, vol. 2, 369
- **G. BUSCA et al.** *Appl. Catal. B,* 1998, vol. 18, 1
- **P. FORZATTI et al.** *Heterog. Chem. Rev.,* 1996, vol. 3, 33
- **S. BRANDENBERGER et al.** *Catal. Rev.,* 2008, vol. 50, 492
- **J.P. CHEN et al.** *J. Catal.,* 1990, vol. 125, 411
- **J. DUE-HANSEN et al.** *J. Catal.,* 2007, vol. 251, 459
- **Y. ZHENG et al.** *Ind. Eng. Chem. Res.,* 2004, vol. 43, 941
- **G.G.PARK et al.** *Microporous and Mesoporous Materials,* 2001, vol. 48, 337-343
- **A.V. KUCHEROV et al.** *J. Catal.,* 1995, vol. 157, 603
- **Á. SZEGEDI et al.** *Appl. Catal. A,* 2004, vol. 272, 257
- **B. WICHTERLOVA et al.** *Appl. Catal. A,* 1993, vol. 103, 269
- **M. RICHTER et al.** *Appl. Catal. B,* 2007, vol. 73, 269
- **A. SZEGEDI et al.** *Appl. Catal. A,* 2004, vol. 272, 257
- **R. KEFIROV et al.** *Micropor. Mesopor. Mater,* 2008, vol. 116, 180
- **C. TORRE-ABREU et al.** *Catal. Today,* 1999, vol. 54, 407
- **M.F. RIBEIRO et al.** *Appl. Catal. B,* 2007, vol. 70, 384
- **M.J. JIA et al.** *J. Mol. Catal. A,* 2002, vol. 185, 151
- **B. COQ et al.** *Appl. Catal. B,* 1995, vol. 6, 271
- **S. KIEGER et al.** *J. Catal.,* 1999, vol. 183, 267
- **W. GRÜNERT et al.** *J. Phys. Chem.,* 1994, vol. 98, 10832
- **A.L. KUSTOV et al.** *Appl. Catal. B,* 2008, vol. 58, 97
- **H. KAMATA et al.** *J. Mol. Catal. A,* 1999, vol. 139, 189
- **G. DEO ; I.E. WACHS.** *J. Catal.,* 1994, vol. 146, 335
- **J.P. DUNN et al.** *J. Catal.,* 1999, vol. 181, 233
- **D.A. BULUSHEV et al.** *Langmuir,* 2001, vol. 17, 5276
- **S.S.R. PUTLURU et al.** *Appl. Catal. B,* 2010, vol. 97, 333
- **M. SCHWIDDER et al.** *J. Catal.,* 2005, vol. 231, 314-330
- **D. GOLDFARB et al.** *J. Am. Chem. Soc.,* 1991, vol. 116, 6344
- **A.L. KUSTOVET.** *Appl. Catal. B,* 2005, vol. 58, 97
- **J. DUE-HANSEN et al.** *Appl. Catal. B,* 2006, vol. 66, 161
- **N. AFGAN et al.** *Int. J. Sustain. Energy,* 2007, vol. 26, 179
- **G.I. KAPUSTIN et al.** *Appl. Catal.,* 1988, vol. 42, 240
- **A.L. KUSTOV et al.** *Appl. Catal. B,* 2005, vol. 58, 97
- **L.J. LOBREE et al.** *J. Catal.,* 1999, vol. 186, 242
- **I. MELIAN-CABRERA et al.** *J. Catal.,* 2006, vol. 238, 250
- **R.Q. LONG et al.** *J. Catal.,* 2002, vol. 207, 274
- **A. GUZMAN-VARGAS et al.** *Appl. Catal. B,* 2003, vol. 42, 369
- **S.C. NDLELA et al.** *Ind. Eng. Chem. Res.,* 2003, vol. 42, 2122